# FASCICULE DE BREVET EUROPEEN

(11) **EP 2 586 703 B1**
(45) Date de publication et mention de la délivrance du brevet: **15.01.2014**
(21) Numéro de dépôt: 12006942.2
(22) Date de dépôt: 08.10.2012
(51) Int. Cl.: B64C 25/26, B64C 25/30, B64C 25/28, B64C 25/24

(54) **Atterrisseur, aéronef et procédé**
Landefahrwerk, Flugzeug und Verfahren
Landing gear, aircraft and method

(30) Priorité: 26.10.2011 FR 1103262
(43) Date de publication de la demande: 01.05.2013
(73) Titulaire: EUROCOPTER, 13725 Marignane Cédex (FR)
(72) Inventeur: Dubois, Robert, 13090 Aix en Provence (FR)
(74) Mandataire: GPI & Associés

(56) Documents cités:
- EP-A2- 2 107 273
- FR-A1- 2 887 516
- FR-A1- 2 946 320
- US-A- 3 224 713
- US-A1- 2009 187 293

## Description

La présente invention concerne un atterrisseur, un aéronef muni d'un tel atterrisseur et un procédé mis en oeuvre par l'atterrisseur.

EP2107273 est considéré de représenter l'état de la technique le plus proche.

L'invention se situe donc dans le domaine technique des atterrisseurs, et plus particulièrement des atterrisseurs d'aéronefs aptes à réaliser un atterrissage vertical et notamment des aéronefs à voilure tournante. En effet, la problématique liée aux avions inapte à l'atterrissage vertical diffère de la problématique liée aux aéronefs à atterrissage vertical. Dès lors, on entend par « atterrissage roulé » un atterrissage réalisé par un avion, par opposition à un « atterrissage vertical » pouvant être réalisé par les aéronefs à atterrissage vertical tels que les hélicoptères.

Indépendamment de la nature de l'aéronef, un atterrisseur peut comporter une pluralité de trains d'atterrissage munis d'au moins une roue pour permettre les évolutions de l'aéronef au sol jusqu'au décollage, l'amortissement de l'impact résultant d'un atterrissage, et grâce à un système de freinage de l'arrêt de l'aéronef sur une distance acceptable.

L'accroissement de la masse et de la vitesse des aéronefs, avec en corollaire l'élévation des énergies cinétiques verticale et horizontale à absorber à l'atterrissage, ont parfois conduit à l'adoption progressive d'amortisseurs oléopneumatiques. De plus, les systèmes de freinage sont parfois munis de commandes hydrauliques.

En outre, le surcroit de traînée aérodynamique généré par les trains d'atterrissage en vol ont induit un intérêt croissant pour des trains d'atterrissage escamotables en vol dans le fuselage de l'aéronef. On comprend qu'il convient de garantir pour des raisons de sécurité la sortie d'un tel train d'atterrissage escamotable hors de son logement préalablement à un atterrissage.

Pour atteindre cet objectif, certains systèmes prévoient une redondance de la commande de sortie du train d'atterrissage pour pallier un dysfonctionnement d'une commande de sortie.

Dans ce contexte, les constructeurs ont mis en place des architectures hydrauliques simples et sûres pour permettre la sortie rapide d'un train d'atterrissage. Une telle architecture comprend un vérin hydraulique par train d'atterrissage relié par des tuyauteries à un réservoir de fluide et à une pompe hydraulique.

Classiquement, le réservoir de fluide d'un hélicoptère se trouve dans une partie supérieure de l'aéronef, alors qu'au contraire le train d'atterrissage se situe de fait dans une partie inférieure de l'aéronef. Des tuyauteries cheminent donc d'une extrémité à une autre de l'hélicoptère, cette disposition maximisant les risques de fuite, la masse du dispositif et la gestion de la cohabitation des différents réseaux hydrauliques et/ou électriques.

En outre, cette architecture nécessite l'emploi de nombreux capteurs pour vérifier le bon fonctionnement des divers organes mis en oeuvre.

Afin d'atteindre les objectifs de sécurité imposés par les règlements de certification, les vérins de rétraction sont généralement des vérins linéaires hydrauliques. Des distributeurs hydrauliques sont reliés par des tuyauteries aux vérins de rétraction linéaires hydrauliques pour requérir la rétraction ou la sortie du train d'atterrissage en fonction d'un ordre d'entrée, cet ordre d'entrée pouvant être un ordre donné mécaniquement ou électriquement.

Les vérins de rétraction hydrauliques sont couramment utilisés dans la mesure où ils offrent une puissance massique optimisée. De plus, ces vérins de rétraction linéaires hydrauliques présentent une faible susceptibilité au phénomène de grippage, cette caractéristique leur conférant un niveau de sécurité acceptable. Le risque de voir un vérin de rétraction linéaire hydraulique s'opposer à une sortie de secours d'un train d'atterrissage sous l'effet de son poids est notamment quasiment nul.

De même, il est usuel de mettre en oeuvre un système de freinage mettant en oeuvre un distributeur hydraulique commandé par des pédales par l'intermédiaire soit d'une liaison mécanique soit d'une transmission hydraulique volumétrique. II en résulte un problème d'installation de tuyauteries hydrauliques depuis le circuit de génération hydraulique jusqu'au niveau du poste de pilotage, puis du poste de pilotage aux freins.

A partir du moment où l'on utilisait pour la régulation du freinage une servovalve asservissant la pression hydraulique à un courant électrique, il apparaissait beaucoup plus simple d'alimenter directement cette servovalve par le circuit de génération hydraulique, et de commander sa pression de sortie par un courant fourni par un transmetteur électrique actionné par le pédalier.

Dès lors, l'état de la technique présente des trains d'atterrissages munis d'un amortisseur, d'un vérin de rétraction hydraulique pour rentrer et sortir le train d'atterrissage d'une case de train, et d'un système de freinage hydraulique.

Cette architecture principalement hydraulique présente l'avantage d'être sure et efficace. Cependant, elle nécessite l'emploi d'un nombre important de tuyauteries, de pompes, de réservoirs de fluide, et de nombreux capteurs.

De plus, sur un aéronef de petite taille tel qu'un hélicoptère, il n'est pas rare d'implémenter des tuyauteries allant d'une extrémité à une autre de l'aéronef.

On comprend donc que cette architecture hydraulique est relativement lourde et encombrante. De plus, la maintenance de l'architecture hydraulique peut être délicate, par exemple pour la recherche de fuite dont les sources peuvent être, de fait, multiples.

On connaît des architectures d'avion de tonnage important mettant en oeuvre des moyens de commande électriques pour piloter des vérins de rétraction hydrauliques.

Cependant pour respecter les exigences de sécurité, il peut être envisagé de doubler voire, de quadrupler les moyens de commande utilisés. L'homme du métier évoque alors des architectures « duplex » ou « quadruplex ».

Une telle architecture a un impact limité sur les avions de tonnage important, en termes de masse. Cependant, l'impact en termes de masse parait rédhibitoire sur un aéronef à atterrissage vertical ayant un faible ou un moyen tonnage.

II est à noter que les avions et les hélicoptères et de manière plus générale les aéronefs à atterrissage notamment vertical présentent des différences notables, le domaine technique des avions à atterrissage roulé et le domaine technique des aéronefs à atterrissage vertical étant alors distincts.

En effet, un avion à atterrissage roulé tel qu'un avion de ligne présente une masse très importante comparée à un aéronef de petite ou moyenne taille à atterrissage vertical. De plus, un avion à atterrissage roulé présente de fait une vitesse d'avancement à l'atterrissage très supérieure à un aéronef à atterrissage vertical.

Ces différences radicales ont conduit les constructeurs d'hélicoptères à adapter au juste besoin les trains d'atterrissage contrairement aux avionneurs, tant dans leur structure que dans leur commande. Compte tenu de l'importance et de la maitrise de l'hydraulique dans le domaine des commandes de vol, ce moyen de commande intrinsèquement disponible, de surcroît sûr, a été privilégié pour assurer la commande des trains d'atterrissage et des freins sur les aéronefs à atterrissage vertical.

Parmi l'état de la technique, on connaît le document FR 2 887 516.

Ce document présente un réseau de communication auquel sont reliés des actionneurs de manoeuvre, d'orientations et de freinage.

Le document FR 2 946 320 montre un système de freinage pour aéronef comprenant un actionneur électromécanique agissant sur un poussoir, le poussoir appliquant un effort de freinage sur un disque.

Le document US 2009/0187293 présente une architecture munie d'un module de contrôle relié à des capteurs de proximité d'un train d'atterrissage et à un levier de contrôle dudit train d'atterrissage.

Le document EP 2107273 présente un atterrisseur muni d'une jambe de train portant deux roues.

De plus, l'atterrisseur comporte un actionneur primaire permettant de manoeuvrer la jambe de train d'une position « train rentré » vers une position « train sorti » et inversement.

Par ailleurs, l'atterrisseur est muni d'un dispositif muni d'une bielle articulée dénommée « hinged stay » et d'un compas dénommé « strut arrangement » qui coopère avec un ressort. Ce dispositif permet de bloquer l'atterrisseur en position « train sorti ».

Par suite, l'atterrisseur comprend un deuxième actionneur pour plier le compas afin de rentrer la jambe de train à l'aide du premier actionneur.

On connait aussi le document US 3224713.

La présente invention a alors pour objet de proposer un atterrisseur pour un aéronef à atterrissage vertical, cet atterrisseur étant relativement léger, simple et apte à respecter les objectifs de sécurité imposés par les règlements de certification en vigueur.

On entend par aéronef à voilure tournante, un aéronef pouvant notamment et pas nécessairement exclusivement réaliser un atterrissage vertical.

Selon l'invention, un atterrisseur d'aéronef et notamment un aéronef apte à réaliser un atterrissage vertical comporte au moins un train d'atterrissage, le train d'atterrissage comprenant une jambe de train portant au moins une roue.

Cet atterrisseur est notamment remarquable en ce que le train d'atterrissage comprend :
- un vérin de rétraction relié à la jambe de train, le vérin de rétraction étant muni d'un moteur électrique déplaçant un moyen mobile du vérin de rétraction par rapport à un moyen fixe du vérin de rétraction d'une position « train rentré » vers une position « train sorti » et de la position « train sorti » vers la position « train rentré » afin respectivement de sortir la roue d'une case de train et de rentrer ladite roue dans la case de train,
- un moyen d'immobilisation électrique ou mécanique pour verrouiller la position du moyen mobile par rapport au moyen fixe et pour permettre le positionnement du moyen mobile dans la position « train sorti » par gravité,
- un premier moyen de surveillance pour surveiller le fonctionnement du vérin de rétraction, le premier moyen de surveillance étant relié à un moyen d'affichage signalant la position du vérin de rétraction et l'état du moyen d'immobilisation,
- un premier moyen de commande du vérin de rétraction, et un deuxième moyen de commande du moyen d'immobilisation.

Dès lors, on obtient un atterrisseur « électrique » simple, peu encombrant, et léger.

En effet, on constate que ces caractéristiques permettent d'obtenir une architecture électrique simplex viable pour un aéronef à atterrissage vertical.

Dès lors, le premier moyen de commande peut être lié au vérin de rétraction par une unique première ligne de commande, et/ ou le deuxième moyen de commande peut être lié au moyen d'immobilisation par une unique deuxième ligne de commande.

Par suite, l'architecture mise en place est bien une architecture électrique dite « simplex ». L'atterrisseur permet alors de supprimer les inconvénients des architectures hydrauliques.

Le vérin de rétraction comporte un moteur électrique permettant d'étendre ou de rétracter ce vérin de rétraction afin de déplacer la jambe de train et par conséquent chaque roue du train d'atterrissage.

L'utilisation d'un tel vérin de rétraction électrique réversible pris isolément paraît incompatible avec des exigences de sécurité élevées en vigueur dans l'aéronautique.

De même, un moyen d'immobilisation pris isolément paraît incompatible avec des exigences de sécurité élevée.

Cependant, ce vérin de rétraction et ce moyen d'immobilisation sont associés à un premier moyen de surveillance.

Si un pilote constate avant l'atterrissage et grâce au premier moyen de surveillance que le vérin de rétraction ne fonctionne pas de manière optimale, ce pilote peut manoeuvrer le moyen d'immobilisation pour que le train d'atterrissage sorte de sa case de train par gravité.

La combinaison d'un vérin de rétraction, d'un moyen d'immobilisation et d'un premier moyen de sécurité permet alors de répondre aux exigences de sécurité imposées sans imposer une architecture duplex ou quadruplex.

L'utilisation de l'atterrisseur peut aussi être associée à des procédures d'atterrissage vertical d'urgence en cas d'incident, du type connues par l'homme du métier.

L'atterrisseur peut de plus comporter une ou plusieurs des caractéristiques additionnelles qui suivent.

Par exemple, le train d'atterrissage est aussi muni :
- d'un unique moyen de freinage comportant un actionneur électrique pour freiner chaque roue,
- d'un deuxième moyen de surveillance pour détecter un dysfonctionnement du moyen de freinage et le signaler à un pilote, ledit deuxième moyen de surveillance étant relié à un organe d'affichage signalant un dysfonctionnement,
- d'un troisième moyen de commande du moyen de freinage.

Le troisième moyen de commande peut être lié au moyen de freinage par une unique troisième ligne de commande,

Le moyen de freinage peut alors comporter un disque et une garniture de freinage coopérant avec ce disque, l'actionneur manoeuvrant un pointeur pressant la garniture contre le disque pour freiner la roue.

L'actionneur électrique peut régler la position du pointeur avec précision afin de régler la pression de la garniture sur le disque de manière à doser le freinage.

Il est à noter qu'un organe de blocage par manque de courant électrique peut bloquer le pointeur de l'actionneur dans une position courante, par exemple dans une position de freinage maximale lorsque l'aéronef est au sol.

En outre, un dysfonctionnement du moyen de freinage avant l'atterrissage est détecté par le deuxième système de surveillance puis signalé à un pilote.

Par exemple, le deuxième système de surveillance comprend un capteur de pression. En corrélant la position du pointeur avec la pression mesurée, on peut déterminer un dysfonctionnement du moyen de freinage et le signaler à un pilote.

Le pilote averti du dysfonctionnement peut appliquer une procédure d'atterrissage strictement vertical pour ne pas avoir à solliciter un moyen de freinage défectueux.

Par suite, l'atterrisseur permet de répondre aux exigences de sécurité selon une architecture électrique simplex.

Selon un autre aspect, le moyen d'immobilisation comporte un frein à manque de courant, le frein bloquant le moyen mobile du vérin de rétraction en l'absence de courant électrique.

A titre de variante, il est possible de prévoir un moyen d'immobilisation mécanique.

Ainsi, dans des conditions normales, le frein à manque de courant n'est pas alimenté électriquement par le deuxième moyen de commande pour immobiliser le moyen mobile du vérin de rétraction, et donc le train d'atterrissage.

Par contre, lorsque le deuxième moyen de commande est commandé pour déclencher la sortie du train d'atterrissage, ce deuxième moyen de commande alimente en courant électrique le moyen d'immobilisation. Sous son propre poids, le train d'atterrissage sort alors de la case de train.

Une fois sorti, on n'alimente plus électriquement le frein à manque de courant qui immobilise le train d'atterrissage en position « train sorti».

Un tel moyen d'immobilisation est donc simple est très sécuritaire.

Selon un autre aspect, le vérin de rétraction peut être un vérin à corps mobile. Dès lors, le vérin de rétraction comporte un moyen fixe de type tige de vérin fixé à une paroi de la case de train et un moyen mobile de type corps de vérin fixé à la jambe de train.

A titre de variante préférée, le vérin de rétraction peut être un vérin à tige mobile. Dès lors, le vérin de rétraction comporte un moyen fixe de type corps de vérin fixé à une paroi de la case de train et un moyen mobile de type tige de vérin fixé à la jambe de train.

Le moteur électrique peut comprendre un stator et un rotor, ce rotor étant solidaire d'une vis et coopérant avec le moyen d'immobilisation. Le moyen mobile inclut une tige de vérin comprenant un écrou agencé sur la vis, l'atterrisseur comprenant un moyen anti-rotatif pour désolidariser en rotation ledit écrou de ladite vis afin qu'une rotation de la vis induise une translation de l'écrou, le premier moyen de surveillance comprenant un premier capteur de fin de course pour détecter l'agencement de la tige de vérin dans la position « train rentré » et un deuxième capteur de fin de course pour détecter l'agencement de la tige de vérin dans la position « train sorti ».

Le moyen anti-rotatif peut être disposé entre l'écrou et un corps de vérin du moyen fixe. Selon une variante alternative, le moyen alternatif peut être agencé entre une structure de l'aéronef et le moteur électrique, pour bloquer en rotation la tige de vérin tout en autorisant un mouvement translatif de cette tige par exemple.

Le vérin de rétraction permet alors de répondre aux besoins en permettant un mouvement d'extension et un mouvement de rétraction de la jambe de train pour sortir ou rentrer le train d'atterrissage dans la case de train.

On note que le premier moyen de surveillance peut comprendre un organe extérieur au vérin de rétraction pour vérifier que le vérin de rétraction est en position « train sorti »

Par ailleurs, le premier moyen de commande inclut optionnellement un organe de gestion communiquant avec le premier moyen de surveillance et le moteur électrique du vérin de rétraction, l'organe de gestion communiquant avec le moyen d'affichage.

Cet organe de gestion peut par exemple interdire la sortie ou la rentrée du train d'atterrissage en fonction de paramètres de vol. A titre d'exemple, si un ordre de rentrée du train d'atterrissage est donné par un pilote alors que l'aéronef repose sur le sol, l'organe de gestion peut ignorer cet ordre et signaler une erreur.

L'organe de gestion peut aussi représenter un organe du premier moyen de commande et commander la sortie ou la rentrée du train d'atterrissage en fonction de paramètres de vol.

De plus, on note que le premier moyen de commande peut inclure un système de commande manoeuvrable par un individu, ce système de commande étant relié à l'organe de gestion.

Selon un autre aspect, la première ligne de commande peut comporter au moins un concentrateur de données et une liaison bidirectionnelle.

Par exemple, pour simplifier le dispositif, l'organe de gestion est relié à un concentrateur de données avant communiquant avec un train d'atterrissage avant via à un bus CAN avant et avec un concentrateur de données arrière, le concentrateur de données arrière communiquant via un premier bus CAN arrière avec un premier train d'atterrissage arrière et via un deuxième bus CAN arrière avec un deuxième train d'atterrissage arrière.

Les termes « avant » et « arrière » font références à la direction d'allongement de l'aéronef, d'une extrémité arrière vers une extrémité avant comprenant le nez de l'aéronef.

En outre, la troisième ligne de commande peut comporter un boîtier de contrôle interposé entre le moyen de freinage et le troisième moyen de commande, le boîtier de contrôle transmettant un ordre de freinage audit moyen de freinage en fonction des ordres d'entrée provenant du troisième moyen de commande et d'une logique de freinage programmée.

En effet, l'atterrisseur peut comporter un premier train d'atterrissage arrière et un deuxième train d'atterrissage arrière munis d'un moyen de freinage.

Chaque pilote comporte alors un organe de commande du troisième moyen de commande par train d'atterrissage arrière.

Le boîtier de contrôle applique alors une logique préétablie de freinage en fonction des ordres provenant des divers organes de commande.

De plus, le boîtier de contrôle peut comporter un module d'autotest pour contrôler le fonctionnement du moyen de freinage avant un atterrissage, le module d'autotest pouvant être un segment de code programmé dans une mémoire du boîtier de contrôle exécutable par un processeur.

Par ailleurs, l'atterrisseur peut comporter un quatrième moyen de commande pour contrôler le moyen de freinage au sol lorsque l'aéronef est arrêté.

Outre un atterrisseur, l'invention vise aussi un aéronef à atterrissage vertical muni d'un tel atterrisseur.

Par ailleurs, l'invention vise aussi un procédé mis en oeuvre par un tel atterrisseur, au cours duquel, préalablement à un atterrissage :
- on vérifie le bon fonctionnement du vérin de rétraction, un défaut de fonctionnement étant signalé à un pilote afin que le pilote utilise le deuxième moyen de commande pour sortir le train d'atterrissage par gravité,
- lorsque ledit atterrisseur comporte un moyen de freinage, on vérifie le bon fonctionnement du moyen de freinage, un défaut de fonctionnement étant signalé au pilote afin que le pilote entame une procédure d'atterrissage vertical ne nécessitant pas la mise en oeuvre du moyen de freinage.

L'invention et ses avantages apparaîtront avec plus de détails dans le cadre de la description qui suit avec des exemples de réalisation donnés à titre illustratif en référence aux figures annexées qui représentent :
- la figure 1, un schéma présentant les organes participant à la rétraction et à la sortie du train d'atterrissage,
- la figure 2, une coupe d'un vérin de rétraction incorporant un moyen d'immobilisation, et
- la figure 3, un schéma présentant les organes participant à au freinage d'une roue du train d'atterrissage.

Les éléments présents dans plusieurs figures distinctes sont affectés d'une seule et même référence.

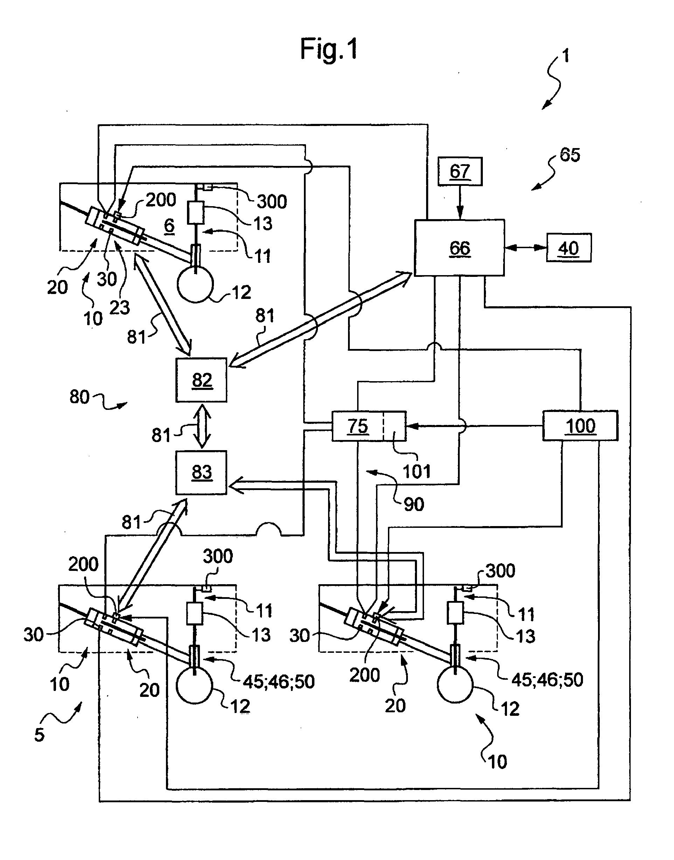

La figure 1 présente un aéronef 1 muni d'un atterrisseur 5. Plus particulièrement, l'aéronef 1 est un aéronef apte à notamment effectuer un atterrissage vertical.

Cet atterrisseur 5 comporte une pluralité de trains d'atterrissage 10 rétractables, trois trains d'atterrissage étant représentés sur cette figure 1 pour former un polygone de sustentation de l'aéronef au sol.

Chaque train d'atterrissage 10 comporte une jambe de train 11 munie d'un amortisseur 13 et d'au moins une roue 12. De plus, le train d'atterrissage est équipé d'un vérin de rétraction 20 relié à la jambe de train 11 pour permettre sur requête la rentrée du train d'atterrissage dans une case de train 6 et la sortie de ce train d'atterrissage au moins partiellement hors de cette case de train 6.

Ce vérin de rétraction 20 est un vérin de rétraction électrique, la longueur du vérin de rétraction pouvant être modifiée sur requête par un moteur 23 électrique et non pas par un moyen hydraulique. Dès lors, le moteur 23 électrique peut rétracter le vérin de rétraction 20 dans une position « train rentré » pour induire un agencement du train d'atterrissage dans la case de train, et peut étendre le vérin de rétraction 20 dans une position « train sorti » pour induire une sortie de la roue du train d'atterrissage hors de la case de train 6. A cet effet, le moteur électrique peut déplacer un moyen mobile du vérin de rétraction par rapport à un moyen fixe de ce vérin de rétraction.

De plus, l'atterrisseur comprend un moyen d'immobilisation 30 par train d'atterrissage pour d'une part immobiliser le vérin de rétraction dans les positions « train rentré » et « train sorti » et, d'autre part permettre le positionnement du vérin de rétraction dans la position « train sorti » par gravité dans une situation « d'urgence ».

Ce moyen d'immobilisation 30 est un moyen électrique coopérant avec le vérin de rétraction 20. Par exemple, le moyen d'immobilisation 30 comprend un frein par manque de courant agencé dans le vérin de rétraction 20 pour immobiliser un moyen mobile du vérin de rétraction, tel qu'une tige de vérin.

Par ailleurs, l'atterrisseur inclut un premier moyen de surveillance pour vérifier le fonctionnement du vérin de rétraction.

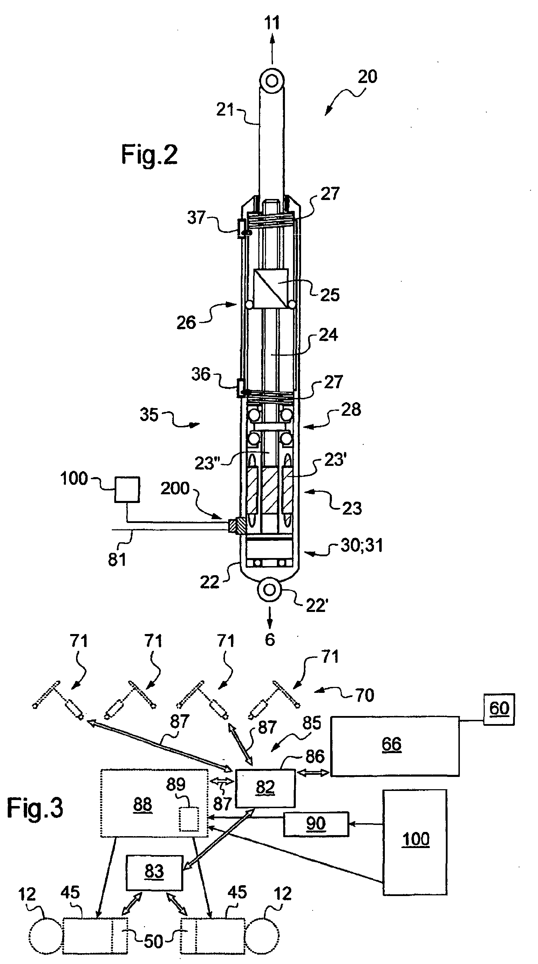

La figure 2 présente une coupe d'un vérin de rétraction 20 selon une réalisation préférée.

Ce vérin de rétraction 20 est muni d'un corps de vérin 22 comprenant un moyen de fixation 22' à une paroi d'une case de train. Dès lors le corps de vérin représente un moyen fixe du vérin de rétraction 20.

A l'inverse, le vérin de rétraction est muni d'un moyen mobile, à savoir une tige de vérin 21 ayant une première extrémité apte à coulisser à l'intérieur du corps de vérin 22 et une deuxième extrémité apte à être fixée à une jambe de train 11.

Pour mettre en mouvement le moyen mobile par rapport au moyen fixe, le vérin de rétraction inclut un moteur 23 électrique.

Ce moteur 23 électrique comporte un stator 23' solidaire du corps de vérin et un rotor 23" solidarisé à une vis 24 par l'intermédiaire d'un dispositif de fixation 28. Le dispositif de fixation peut inclure une paire de roulement à rouleaux ou à contacts obliques.

Dès lors, la tige de vérin 21 est munie d'un écrou 25 traversé par la vis 24. Un tel écrou peut être un écrou à rouleaux satellites.

L'atterrisseur comprend un moyen anti-rotatif 26 pour désolidariser en rotation l'écrou 25 de la vis 24 afin qu'une rotation de cette vis 24 induise une translation de l'écrou 25.

Ce moyen anti-rotatif 26 peut alors être agencé entre l'écrou 25 et le corps de vérin 21. D'autres variantes sont néanmoins possibles.

Le vérin de rétraction peut de plus inclure deux amortisseurs de fin de course 27.

Par ailleurs, le premier moyen de surveillance 35 inclut un premier capteur de fin de course 36 détectant le positionnement du moyen mobile dans la position « train rentré », et un deuxième capteur de fin de course 37 détectant le positionnement du moyen mobile dans la position « train sorti ».

Selon un autre aspect, le moyen d'immobilisation 30 est favorablement inséré dans le corps de vérin 22.

Ce moyen d'immobilisation 30 comprend un frein 31 à manque de courant apte à bloquer le rotor 23" et donc la tige de vérin lorsqu'il n'est pas alimenté électriquement.

Ainsi, en l'absence de courant électrique, le frein 31 immobilise le rotor 23" et donc fige la position du moyen mobile par rapport au moyen fixe du vérin de rétraction, à savoir la position de la tige de vérin 21 par rapport au corps de vérin 22.

Le frein 31 comporte avantageusement deux bobines aptes chacune à débloquer le vérin de rétraction. Une première bobine permet la rétraction ou l'extension du vérin de rétraction sur action du moteur 23 dans un mode normal, une deuxième bobine permettant l'extension du vérin par gravité dans un mode de secours.

En référence à la figure 1, l'atterrisseur comporte un premier moyen de commande 65 pour commander le moteur 23 de chaque vérin de rétraction, ces moteurs étant alimentés électriquement par un moyen de génération électrique 100 de l'aéronef.

Le premier moyen de commande transmet alors un ordre à chaque moteur.

Cet ordre peut être transmis par une unique première ligne de commande à chaque moteur. On entend par l'expression « transmis pas une unique première ligne de commande à chaque moteur » qu'il n'est pas nécessaire de redonder les moyens de communication entre le premier moyen de commande et chaque moteur.

Ainsi, le premier moyen de commande peut comprendre un organe de gestion 66 communiquant avec le premier moyen de surveillance 35 et le moteur électrique du vérin de rétraction de chaque train d'atterrissage, cet organe de gestion 66 communiquant avec un moyen d'affichage 40. Un tel organe de gestion peut être une unité munie d'au moins un processeur et d'une mémoire par exemple.

De plus, le premier moyen de commande 65 peut inclure un système de commande 67 manoeuvrable par un pilote, le système de commande 67 étant relié à l'organe de gestion 66.

La première ligne de commande 80 peut alors comprendre au moins un concentrateur de données et des liaisons filaires bidirectionnelles.

Selon la réalisation préférée présentée, l'organe de gestion 66 communique par un bus de type CAN avec un concentrateur de données avant 82, ce concentrateur de données avant communiquant avec l'électronique de puissance 200 d'un train d'atterrissage avant via un bus CAN.

De plus, le concentrateur de données avant 82 communique avec un concentrateur de données arrière 83, ce concentrateur de données arrière 83 communiquant avec l'électronique de puissance 200 d'un premier train d'atterrissage arrière via un bus CAN et avec l'électronique de puissance 200 d'un deuxième train d'atterrissage arrière via un autre bus CAN.

Par ailleurs, l'atterrisseur 5 comporte un deuxième moyen de commande 75 pour commander chaque moyen d'immobilisation 30.

Ce deuxième moyen de commande peut comprendre une unique ligne de commande comprenant deux fils par moyen d'immobilisation, un premier fil reliant directement un moyen d'immobilisation alors qu'un deuxième fil relie directement le moyen d'immobilisation via l'organe de gestion 66.

Le deuxième moyen de commande 75 peut comporter une batterie 101 de secours pour alimenter les moyens d'immobilisation si nécessaire.

En vol, chaque train d'atterrissage est rentré dans sa case de train 6. Le premier capteur de fin de course de chaque vérin de rétraction indique à l'organe de gestion que le moyen mobile est dans la position « train rentré », l'organe de gestion retranscrivant cette information sur le moyen d'affichage 40.

De même, une information de verrouillage du train d'atterrissage relative à l'état du moyen d'immobilisation est affichée sur le moyen d'affichage 40.

Pour vérifier cette information, l'organe de gestion peut activer les moteurs électriques de chaque vérin de rétraction. Si le moyen mobile reste en position, et donc si les informations provenant des premiers capteurs de fin de course demeurent inchangées, l'organe de gestion en déduit que le moyen d'immobilisation fonctionne correctement.

En outre, si la sortie des trains d'atterrissage est requise, par exemple via le système de commande 67, l'organe de gestion peut vérifier la pertinence de l'ordre en utilisant des informations provenant d'organes annexes de l'aéronef éventuellement.

A titre d'exemple, l'organe de gestion peut ignorer l'ordre de sortie si l'aéronef évolue à une vitesse d'avancement supérieure à un seuil, tout en signalant l'incohérence au pilote via le moyen d'affichage 40.

Si l'ordre n'est pas jugé incohérent, l'organe de gestion 66 transmet un ordre de sortie à chaque train d'atterrissage. Lorsque l'électronique de puissance 200 de chaque vérin de rétraction reçoit un ordre de déplacement du train d'atterrissage, l'électronique de puissance 200 de chaque vérin de rétraction alimente la première bobine du frein 31 à manque de courant associé pour débloquer le vérin de rétraction.

Dès lors, l'électronique de puissance de chaque vérin de rétraction alimente électriquement le moteur 23 associé pour engendrer la rotation de son rotor 23", le rotor 23" entraînant la rotation de la vis 24 du vérin de rétraction. II en résulte une translation du moyen mobile du vérin de rétraction.

Quand le moyen mobile atteint le deuxième capteur de fin de course, ce deuxième capteur de fin de course en informe l'électronique de puissance 200 qui arrête le moteur 23 et cesse d'alimenter la première bobine. Le vérin de rétraction est de nouveau bloqué.

On comprend que le vérin de rétraction est un vérin à deux positions, à savoir une position « train sorti » et une position « train rentré ».

Cette information peut être confirmée par un organe extérieur 300, tel qu'un capteur à poussoir coopérant avec la jambe de train dans la position « train sorti ».

Selon le procédé mis en oeuvre, si le train d'atterrissage n'est pas sorti, à savoir si l'organe extérieur 300 n'est pas actionné par exemple, un défaut de fonctionnement est transmis au pilote, l'organe de gestion sollicitant à cet effet le moyen d'affichage 40.

On note que l'on entend par « moyen d'affichage », un unique moyen d'affichage ou un ensemble de moyens d'affichages distincts.

Le pilote peut alors actionner le deuxième moyen de commande 75.

Dans la réalisation présentée, le deuxième moyen de commande 75 sollicite l'organe de gestion 66. Cet organe de gestion peut inhiber l'ordre de déploiement de secours en cas d'incohérence, par exemple si l'organe de gestion détermine que l'aéronef est au sol. A cet effet, l'organe de gestion est agencé en série sur la deuxième ligne de commande 90 reliant le deuxième moyen de commande à chaque moyen d'immobilisation.

Dans un mode de secours, le deuxième moyen de commande alimente la deuxième bobine du frein 31 de chaque train d'atterrissage pour débloquer chaque vérin de rétraction. La masse de chaque train d'atterrissage et notamment de l'ensemble comprenant la jambe de train et la roue génère un effort de traction sur chaque moyen mobile. Chaque moyen mobile translate alors sous l'effet de la gravité uniquement.

Une fois un train d'atterrissage sorti, on cesse d'alimenter électriquement la deuxième bobine pour bloquer le vérin de rétraction en position « train sorti ».

Par exemple, l'organe de gestion 66 coupe l'alimentation électrique du moyen d'immobilisation lorsqu'il reçoit un signal des organes extérieurs 300, cet organe de gestion fonctionnant comme un interrupteur pouvant ouvrir ou fermer un circuit électrique en fonction de la situation.

En outre, au moins deux trains d'atterrissages de l'atterrisseur comprennent chacun un moyen de freinage 45 pour freiner au moins une roue de ce train d'atterrissage.

Par exemple, un premier train d'atterrissage arrière et un deuxième train d'atterrissage arrière répartis de part et d'autre d'un plan de symétrie antéropostérieur comporte chacun un moyen de freinage.

Dès lors, il est possible de contrôler les évolutions au sol de l'aéronef à l'aide des freins. En freinant les roues d'un unique train d'atterrissage arrière, on peut effectivement faire tourner l'aéronef.

Chaque moyen de freinage 45 peut comporter un actionneur 46 électrique pour déplacer une garniture de freinage par rapport à un disque de freinage solidaire en rotation des roues du train d'atterrissage.

De plus, chaque train d'atterrissage peut comprendre un deuxième moyen de surveillance 50 pour surveiller le fonctionnement du moyen de freinage.

En outre, chaque moyen de freinage peut comprendre un organe d'immobilisation de l'actionneur électrique de chaque moyen de freinage pour maintenir une pression de freinage, tel qu'un organe par manque de courant.

En référence à la figure 3, un troisième moyen de commande 70 permet de contrôler le freinage exercé.

Par exemple, le troisième moyen de commande comporte un organe de commande 71 par pilote et par moyen de freinage, soit quatre organes de commande 71 pour un pilote et un copilote selon la réalisation représentée.

Une troisième ligne de commande 85 relie alors chaque organe de commande aux moyens de freinage, la troisième ligne de commande comprenant un boîtier de contrôle 88.

Par exemple, chaque organe de commande est relié à un concentrateur de données 82 par un bus CAN, le concentrateur de données 82 étant relié au boîtier de contrôle 88 par un autre bus CAN. Ce boîtier de contrôle 88 est alors relié à chaque moyen de freinage, notamment à chaque actionneur 45 et aux deuxièmes moyens de surveillances 50 des moyens de freinage.

En outre, le boîtier de contrôle est alimenté électriquement par un générateur électrique 100.

De plus, le boîtier de contrôle peut communiquer avec un moyen de gestion, tel que l'organe de gestion 66 dénommé parfois « aircraft management computer » en langue anglaise.

Ce boîtier de contrôle peut comprendre au moins un processeur et une mémoire, le processeur commandant le moyen de freinage en fonction d'une logique préprogrammée dans la mémoire.

Par ailleurs, le boîtier de contrôle peut comprendre un module d'autotest 89 apte à contrôler le moyen de freinage avant un atterrissage, le module d'autotest pouvant être un segment de code d'un logiciel par exemple.

Enfin, le système de freinage inclut un quatrième moyen de commande 90 alimenté par un moyen de génération électrique 100 et apte à communiquer avec le boîtier de contrôle.

Par exemple, le quatrième moyen de commande 90 transmet au sol la puissance électrique au boîtier de contrôle 88 pour requérir un freinage maximal des roues. Un tel quatrième moyen de commande 90 est parfois dénommé « frein de parking ».

Par suite, avant l'atterrissage, le module 89 d'autotest vérifie le fonctionnement des moyens de freinage.

Par exemple, ce module 89 requiert un déplacement de l'actionneur 45 calibré pour générer une pression prédéterminée de la garniture de freinage sur le disque de freinage. Si le deuxième moyen de surveillance ne détecte pas la pression adéquate, le boîtier de contrôle 88 en informe l'organe de gestion 66 qui en informe le pilote par un organe d'affichage 60.

Le pilote entame alors une procédure d'atterrissage vertical pour ne pas solliciter des moyens de freinage potentiellement défectueux.

D'autres procédés de surveillance connus sont envisageables.

Par ailleurs, lorsque le troisième moyen de commande 70 émet un ordre de freinage, cet ordre de freinage est transmis au boîtier de contrôle 88.

L'ordre peut éventuellement être transmis à l'organe de gestion 66 pour vérification. Ainsi, l'organe de gestion 66 peut inhiber l'ordre de freinage si cet ordre de freinage s'avère inapproprié. Par exemple, l'organe de gestion peut inhiber ou modifier un ordre de freinage dissymétrique et violent risquant d'induire une embardée de l'aéronef lorsque l'aéronef se déplace à une vitesse relativement importante au sol.

Dans l'hypothèse où un ordre de freinage valide est transmis au boîtier de contrôle 88, ce boîtier de contrôle 88 commande les actionneurs 45 électriques selon la logique préprogrammée.

Au sol et éventuellement aéronef arrêté, il est aussi possible de freiner les roues à l'aide du quatrième moyen de commande 90.

Si un individu manoeuvre le quatrième moyen de commande 90, ce quatrième moyen de commande 90 ordonne au boîtier de contrôle 88 d'exercer un freinage maximal, voire de bloquer les moyens de freinage dans une position générant un freinage maximal.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Atterrisseur (5) d'aéronef (1) à atterrissage vertical comportant au moins un train d'atterrissage (10), le train d'atterrissage (10) comprenant une jambe de train (11) portant au moins une roue (12),
**caractérisé en ce que** ledit train d'atterrissage (10) comprend :
- un vérin de rétraction (20) relié à la jambe de train (11), le vérin de rétraction (20) étant muni d'un moteur (23) électrique déplaçant un moyen mobile (21) du vérin de rétraction par rapport à un moyen fixe (22) du vérin de rétraction d'une position « train rentré » vers une position « train sorti » et de la position « train sorti » vers la position « train rentré » afin respectivement de sortir ladite roue (12) d'une case de train et de rentrer ladite roue (12) dans la case de train,
- un moyen d'immobilisation (30) pour verrouiller la position du moyen mobile (21) par rapport au moyen fixe (22) et pour permettre le positionnement du moyen mobile (21) dans la position « train sorti » par gravité,
- un premier moyen de surveillance (35) pour surveiller le fonctionnement du vérin de rétraction (20), ledit premier moyen de surveillance (35) étant relié à un moyen d'affichage (40) signalant la position du vérin de rétraction et l'état du moyen d'immobilisation,
- un premier moyen de commande (65) du vérin de rétraction (20), et un deuxième moyen de commande (75) du moyen d'immobilisation (30).

2. Atterrisseur selon la revendication 1,
**caractérisé en ce que** ledit train d'atterrissage (10) comprend :
- un unique moyen de freinage (45) comportant un actionneur (46) électrique pour freiner chaque roue (12),
- un deuxième moyen de surveillance (50) pour détecter un dysfonctionnement du moyen de freinage (45), ledit deuxième moyen de surveillance (50) étant relié à un organe d'affichage (60) signalant un dysfonctionnement,
- un troisième moyen de commande (70) du moyen de freinage (45).

3. Atterrisseur selon la revendication 1,
**caractérisé en ce que** le premier moyen de commande (65) est lié au vérin de rétraction (20) par une unique première ligne de commande (80), et/ ou le deuxième moyen de commande (75) est lié au moyen d'immobilisation (30) par une unique deuxième ligne de commande (90) et/ ou un troisième moyen de commande (70) est lié à un moyen de freinage par une unique troisième ligne de commande (85).

4. Atterrisseur selon l'une quelconque des revendications 1 à 3,
**caractérisé en ce que** ledit moyen d'immobilisation (30) comporte un frein (31) à manque de courant, ledit frein (31) bloquant le moyen mobile en l'absence de courant électrique.

5. Atterrisseur selon l'une quelconque des revendications 1 à 4,
**caractérisé en ce que** ledit moteur (23) électrique comprend un stator (23') et un rotor (23"), ledit rotor (23") étant solidaire d'une vis (24) et coopérant avec ledit moyen d'immobilisation (30), ledit moyen mobile comprend une tige de vérin (21) munie d'un écrou (25) agencée sur ladite vis (24), ledit atterrisseur comprenant un moyen anti-rotatif (26) pour désolidariser en rotation ledit écrou de ladite vis afin qu'une rotation de la vis induise une translation de l'écrou, ledit premier moyen de surveillance (35) comprenant un premier capteur de fin de course (36) pour détecter l'agencement de la tige de vérin (21) dans la position « train rentré » et un deuxième capteur de fin de course (37) pour détecter l'agencement de la tige de vérin (21) dans la position « train sorti ».

6. Atterrisseur selon l'une quelconque des revendications 1 à 5,
**caractérisé en ce que** ledit premier moyen de surveillance (35) comprend un organe extérieur (300) au vérin de rétraction pour vérifier que ledit vérin de rétraction est dans la position « train sorti ».

7. Atterrisseur selon l'une quelconque des revendications 1 à 6,
**caractérisé en ce que** ledit premier moyen de commande (65) inclut un organe de gestion (66) communiquant avec le premier moyen de surveillance (35) et le moteur électrique du vérin de rétraction, ledit organe de gestion (66) communiquant avec ledit moyen d'affichage (40).

8. Atterrisseur selon la revendication 7,
**caractérisé en ce que** ledit premier moyen de commande (65) inclut un système de commande (67) manoeuvrable par un individu, ledit système de commande (67) étant relié audit organe de gestion (66).

9. Atterrisseur selon l'une quelconque des revendications 1 à 8,
**caractérisé en ce que** ladite première ligne de commande (80) comporte au moins un concentrateur de données (82) et une liaison bidirectionnelle (81).

10. Atterrisseur selon la revendication 2,
**caractérisé en ce qu'**une troisième ligne de commande (85) comporte une boîtier de contrôle (88) interposé entre ledit moyen de freinage (45) et ledit troisième moyen de commande (70), ledit boîtier de contrôle (88) transmettant un ordre de freinage audit moyen de freinage (45) en fonction des ordres d'entrée provenant dudit troisième moyen de commande (70) et d'une logique de freinage programmée.

11. Atterrisseur selon la revendication 10,
**caractérisé en ce que** ledit boîtier de contrôle (88) comporte un module (89) d'autotest pour contrôler le fonctionnement du moyen de freinage (45) avant un atterrissage.

12. Atterrisseur selon la revendication 2,
**caractérisé en ce qu'**il comporte un quatrième moyen de commande (90) pour contrôler le moyen de freinage (45) au sol afin que le moyen de freinage exerce un freinage maximal.

13. Aéronef (1) à atterrissage vertical,
**caractérisé en ce qu'**il comporte un atterrisseur (5) selon l'une quelconques des revendications 1 à 12.

14. Procédé mis en oeuvre par un atterrisseur (5) selon l'une quelconque des revendications 1 à 12, au cours duquel, préalablement à un atterrissage :
- on vérifie le bon fonctionnement de chaque vérin de rétraction (20), un défaut de fonctionnement étant signalé à un pilote afin que le pilote utilise le deuxième moyen de commande (75) pour sortir le train d'atterrissage (10) par gravité,
- lorsque ledit atterrisseur comporte un moyen de freinage, on vérifie le bon fonctionnement chaque moyen de freinage (45), un défaut de fonctionnement étant signalé au pilote afin que le pilote entame une procédure d'atterrissage vertical ne nécessitant pas la mise en oeuvre du moyen de freinage (45).

## Patentansprüche

1. Landefahrwerk (5) eines Luftfahrzeugs (1), welches vertikal landet, mit mindestens einem Fahrgestell (10), das eine Gestellstütze (11) aufweist, die mindestens ein Rad (12) trägt,
**dadurch gekennzeichnet, dass** das Fahrgestell (10) aufweist:
- eine Einziehspindel (20), die mit der Gestellstütze (11) verbunden ist, wobei die Einziehspindel (20) mit einem Elektromotor (23) verbunden ist, der ein bewegliches Organ (21) der Einziehspindel relativ zu einem festen Organ (22) der Einziehspindel aus einer Stellung "Gestell eingefahren" in eine Stellung "Gestell ausgefahren" und aus der Stellung "Gestell ausgefahren" in die Stellung "Gestell eingefahren" bewegt, um das Rad (12) aus einem Gestellkasten auszufahren bzw. um das Rad (12) in den Gestellkasten einzufahren,
- ein Arretierungsmittel (30), um die Stellung des beweglichen Organs (21) relativ zum festen Organ (22) zu verriegeln, und um die Positionierung des beweglichen Organs (21) durch die Schwerkraft in der Stellung "Gestell ausgefahren" zu ermöglichen,
- ein erstes Überwachungsmittel (35), um das Funktionieren der Einziehspindel (20) zu überwachen, wobei das erste Überwachungsmittel (35) mit einer Anzeige (40) verbunden ist, die die Stellung der Einziehspindel und den Zustand des Arretierungsmittels anzeigt,
- ein erstes Steuermittel (65) der Einziehspindel (20) und ein zweites Steuermittel (75) des Arretierungsmittels (30).

2. Landefahrwerk nach Anspruch 1,
**dadurch gekennzeichnet, dass** das Fahrgestell (10) aufweist:
- ein einziges Bremsmittel (45) mit einem elektrischen Betätigungsglied (46), um jedes Rad (12) zu bremsen,
- ein zweites Überwachungsmittel (50) zum Erfassen eines Nicht-Funktionierens des Bremsmittels (45), wobei das zweite Überwachungsmittel (50) mit einer Anzeige (60) verbunden ist, die ein Nicht-Funktionieren anzeigt,
- ein drittes Steuermittel (70) des Bremsmittels (45).

3. Landefahrwerk nach Anspruch 1,
**dadurch gekennzeichnet, dass** das erste Steuermittel (65) mit der Einziehspindel (20) über eine einzige erste Steuerleitung (80) verbunden ist und/oder das zweite Steuermittel (75) mit dem Arretierungsmittel (30) über eine einzige zweite Steuerleitung (90) verbunden ist und/oder ein drittes Steuermittel (70) mit einem Bremsmittel über eine einzige dritte Steuerleitung (85) verbunden ist.

4. Landefahrwerk nach einem der Ansprüche 1 bis 3,
**dadurch gekennzeichnet, dass** das Arretierungsmittel (30) eine Stromlos-Bremse (31) aufweist, die das bewegliche Organ in Abwesenheit eines elektrischen Stroms bremst.

5. Landefahrwerk nach einem der Ansprüche 1 bis 4,
**dadurch gekennzeichnet, dass** der Elektromotor (23) einen Stator (23') und einen Rotor (23") aufweist, wobei der Rotor (23") mit einer Schraube (24) fest verbunden ist und mit dem Arretierungsmittel (30) zusammenwirkt, wobei das bewegliche Organ eine Spindelstange (21) aufweist, die mit einer Schraubenmutter (25) versehen ist, die auf der Schraube (24) angeordnet ist, wobei das Landefahrwerk ein Rotationsverhinderungsmittel (26) aufweist, um die Schraubenmutter der Schraube durch Drehen zu lösen, damit eine Drehung der Schraube eine Translationsbewegung der Schraubenmutter bewirkt, wobei das erste Überwachungsmittel (35) einen ersten Endstellungssensor (36) aufweist, um die Anordnung der Spindelstange (21) in der Stellung "Gestell eingefahren" zu erfassen, und einen zweiten Endstellungssensor (37), um die Anordnung der Spindelstange (21) in der Stellung "Gestell ausgefahren" zu erfassen.

6. Landefahrwerk nach einem der Ansprüche 1 bis 5,
**dadurch gekennzeichnet, dass** das erste Überwachungsmittel (35) ein Organ (300) außerhalb der Einziehspindel aufweist, um zu überprüfen, ob sich die Einziehspindel in der Stellung "Gestell ausgefahren" befindet.

7. Landefahrwerk nach einem der Ansprüche 1 bis 6,
**dadurch gekennzeichnet, dass** das erste Steuermittel (65) ein Verwaltungsorgan (66) aufweist, das mit dem ersten Überwachungsmittel (35) und dem Elektromotor der Einziehspindel kommuniziert, wobei das Verwaltungsorgan (66) mit der Anzeige (40) kommuniziert.

8. Landefahrwerk nach Anspruch 7,
**dadurch gekennzeichnet, dass** das erste Steuermittel (65) ein von einer Person betätigbares Steuersystem (67) aufweist, wobei das Steuersystem (67) mit dem Verwaltungsorgan (66) verbunden ist.

9. Landefahrwerk nach einem der Ansprüche 1 bis 8,
**dadurch gekennzeichnet, dass** die erste Steuerleitung (80) mindestens einen Datenkonzentrator (82) und eine Zweirichtungsverbindung (81) aufweist.

10. Landefahrwerk nach Anspruch 2,
**dadurch gekennzeichnet, dass** eine dritte Steuerleitung (85) einen Steuerkasten (88) aufweist, der zwischen dem Bremsmittel (45) und dem dritten Steuermittel (70) angeordnet ist, wobei der Steuerkasten (80) einen Bremsbefehl an das Bremsmittel (45) in Abhängigkeit von Eingangsbefehlen von dem dritten Steuermittel (70) und einer programmierten Bremslogik sendet.

11. Landefahrwerk nach Anspruch 10,
**dadurch gekennzeichnet, dass** der Steuerkasten (88) ein Selbsttestmodul (89) aufweist, um das Funktionieren des Bremsmittels (45) vor einer Landung zu überprüfen.

12. Landefahrwerk nach Anspruch 2,
**dadurch gekennzeichnet, dass** es ein viertes Steuermittel (90) aufweist zum Überwachen des Bremsmittels (45) am Boden, um sicherzustellen, dass das Bremsmittel eine maximale Bremskraft ausübt.

13. Luftfahrzeug (1), welches vertikal landet,
**dadurch gekennzeichnet, dass** es ein Landefahrwerk (5) nach einem der Ansprüche 1 bis 12 aufweist.

14. Verfahren, welches von einem Landefahrwerk (5) nach einem der Ansprüche 1 bis 12 ausgeführt wird, während dem vor einer Landung:
- man das Funktionieren jeder Einziehspindel (20) überprüft, wobei ein Funktionsfehler einem Piloten übermittelt wird, damit der Pilot das zweite Steuermittel (75) verwendet, um das Fahrgestell (10) durch die Schwerkraft auszufahren,
- wenn das Landefahrwerk ein Bremsmittel aufweist, man das Funktionieren jedes Bremsmittels (45) überprüft, wobei ein Nicht-Funktionieren dem Piloten übermittelt wird, damit der Pilot einen Vertikal-Landeprozess einleitet, die den Einsatz des Bremsmittels (45) nicht erfordert.

## Claims

1. Landing gear (5) for an aircraft (1) capable of landing vertically, the landing gear comprising at least one undercarriage (10), the undercarriage (10) comprising a landing gear leg (11) carrying at least one wheel (12), **characterised in that** said undercarriage (10) comprises:
- a retraction cylinder (20) connected to the landing gear leg (11), the retraction cylinder (20) being provided with an electric motor (23) moving a movable means (21) of the retraction cylinder relative to a stationary means (22) of the retraction cylinder from a "landing gear retracted" position to a "landing gear extended" position, and from the "landing gear extended" position to the "landing gear retracted" position in order respectively to extend said wheel (12) from a wheel bay and to retract said wheel (12) into the wheel bay;
- an immobilising means (30) for locking the position of the movable means (21) relative to the stationary means (22) and for enabling the movable means (21) to be positioned in the "landing gear extended" position by gravity;
- a first monitoring means (35) for monitoring the operation of the retraction cylinder (20), said first monitoring means (35) being connected to a display means (40) indicating the position of the retraction cylinder and the state of the immobilising means;
- a first control means (65) for controlling the retraction cylinder (20), and a second control means (75) for controlling the immobilising means (30).

2. Landing gear according to Claim 1,
**characterised in that** said undercarriage (10) comprises:
- a single brake means (45) comprising an electric actuator (46) for braking each wheel (12);
- a second monitoring means (50) for detecting a malfunction of the brake means (45), said second monitoring means (50) being connected to a display member (60) signalling a malfunction;
- a third control means (70) for controlling the brake means (45).

3. Landing gear according to Claim 1,
**characterised in that** the first control means (65) is connected to the retraction cylinder (20) by a single first control line (80), and/or the second control means (75) is connected to the immobilising means (30) by a single second control line (90), and/or a third control means (70) is connected to a brake means by a single third control line (85).

4. Landing gear according to any one of Claims 1 to 3, **characterised in that** said immobilising means (30) comprises a power-failure brake, said brake (31) blocking the movable means in the absence of electric current.

5. Landing gear according to any one of Claims 1 to 4, **characterised in that** said electric motor (23) comprises a stator (23') and a rotor (23"), said rotor (23") being integral with a screw (24) and co-operating with said immobilising means (30), said movable means comprising a cylinder rod (21) provided with a nut (25) arranged on said screw (24), said landing gear comprising an anti-rotation means (26) for decoupling said nut rotationally from said screw so that a rotation of the screw causes the nut to move in translation, said first monitoring means (35) comprising a first end-of-travel sensor (36) for detecting that the cylinder rod (21) is arranged in the "landing gear retracted" position, and a second end-of-travel sensor (37) for detecting that the cylinder rod (21) is arranged in the "landing gear extended" position.

6. Landing gear according to any one of Claims 1 to 5, **characterised in that** said first monitoring means (35) comprises an external member (300) which is external to the retraction cylinder for verifying that said retraction cylinder is in the "landing gear extended" position.

7. Landing gear according to any one of Claims 1 to 6, **characterised in that** said first control means (65) includes a management member (66) communicating with the first monitoring means (35) and the electric motor of the retraction cylinder, said management member (66) communicating with said display means (40).

8. Landing gear according to Claim 7,
**characterised in that** said first control means (65) includes a control system (67) operable by a person, said control system (67) being connected to said management member (66).

9. Landing gear according to any one of Claims 1 to 8, **characterised in that** said first control line (80) comprises at least one data concentrator (82) and a bi-directional connection (81).

10. Landing gear according to Claim 2,
**characterised in that** a third control line (85) comprises a control unit (88) interposed between said brake means (45) and said third control means (70), said control unit (88) transmitting a braking order to said brake means (45) as a function of the input orders coming from said third control means (70) and from programmed braking logic.

11. Landing gear according to Claim 10,
**characterised in that** said control unit (88) comprises a self-test module (89) for checking the operation of the brake means (45) before landing.

12. Landing gear according to Claim 2,
**characterised in that** it comprises a fourth control means (90) for controlling the brake means (45) on the ground so as to cause the brake means to exert maximum braking.

13. Aircraft (1) capable of landing vertically,
**characterised in that** it comprises landing gear (5) according to any one of Claims 1 to 12.

14. Method implemented by landing gear (5) according to any one of Claims 1 to 12, during which, prior to landing:
- proper operation of each retraction cylinder (20) is verified, faulty operation being signalled to a pilot so that the pilot uses the second control means (75) to extend the undercarriage (10) by gravity;
- when said landing gear comprises a brake means, proper operation of each brake means (45) is verified, faulty operation being signalled to the pilot so that the pilot initiates a vertical landing procedure that does not require use of the brake means (45).
